# EUROPÄISCHE PATENTANMELDUNG

(11) **EP 1 367 683 A1**
(43) Veröffentlichungstag der Anmeldung: **03.12.2003**
(21) Anmeldenummer: 03008233.3
(22) Anmeldetag: 09.04.2003
(51) Int. Cl.: H02G 3/00, B64C 1/18

(54) **Kanal-Anordnung zur Aufnahme von Leitungen**

(30) Priorität: 28.05.2002 DE 10223840
(71) Anmelder: Airbus Deutschland GmbH, 21129 Hamburg (DE)
(72) Erfinder: Motzigkeit, Daniel, Dipl.-Ing., 22559 Hamburg (DE)
(74) Vertreter: Hansmann, Dierk, Dipl.-Ing.

(57) **Zusammenfassung**

Die Erfindung betrifft eine Kanal-Anordnung zur Aufnahme von isolierten Leitungen und Geräten in einem Verkehrsflugzeug gemäß dem Oberbegriff des Anspruchs 1.

Mit ihr wird eine Kanal-Anordnung für ein flugzeuginternes Unterhaltungssystem derart verbessert, dass mit einem fußbodenintegrierten Leitungs- und Gerätekanal eine unkomplizierte und flexible Verkabelung der Sitze realisiert wird. Der fertigen Kanal-Anordnung werden keine Restgefährdungen hinsichtlich drohender Stolpergefahr für Personen und möglicher Beschädigung der kanalaufgenommenen Geräte und der Anschlussverkabelung verbleiben. Es wird eine kanalinterne Variation des Einbauorts der Geräte und der Anschlussverkabelung der Sitze umgesetzt.

Die Kanal-Anordnung realisiert mit einem Kanal (1) für flugzeuginterne Unterhaltungssysteme die Aufnahme von isolierten Leitungen und Geräten in einem Verkehrsflugzeug. Der Kanal (1) liegt einer strukturintegrierten Querträgerauflage (21) auf und ist durch letztere abgestützt. Er ist nahe oder neben einer fußbodenintegrierten und horizontal angeordneten Profilauflage (2) gelegen, auf der eine plattenartige Kanalabdeckung (3) abgelegt ist, wobei die fußbodenintegrierte Profilauflage (2) und die plattenartige Kanalabdeckung (3) in Flugzeug-Längsachsenrichtung geführt sind. Der Kanalquerschnitt ist mit einem doppel-L-förmig gebogenen Leichtmetallprofil realisiert, dessen stegartiger Kanalmittelbereich (5) lotrecht stehend auf der Querträgerauflage (21) positioniert ist. Außerdem ist ein oberer Kanalgurtbereich, der seitwärts an einer oberen Biegekante des Kanalmittelbereiches über die gestreckte Profillänge rechtwinklig abgewinkelt ist, auf der fußbodenintegrierten Profilauflage und ein unterer Kanalgurtbereich auf der horizontal gelegenen Querträgerauflagefläche (21) angeordnet. Einem Randbereich der Kanalabdeckung (3), der sich in Flugzeug-Längsachsenrichtung erstreckt, sind querseitig der Kanalabdeckung (3) mehrere Kabeldurchführungen ausgespart, die längsseitig der Kanalabdeckung (3) im Abstand zueinander angeordnet sind, durch die eine kanalverlegte Leitung oder ein Leitungsbündel geführt sind. Der Randbereich ist randseitlich aufliegend der fußbodenintegrierten Profilauflage (2) angeordnet.

## Beschreibung

Die Erfindung betrifft eine Kanal-Anordnung zur Aufnahme von isolierten Leitungen und Geräten in einem Verkehrsflugzeug gemäß dem Oberbegriff des Anspruchs 1.

Es ist bekannt, dass Passagierflugzeuge vom Typ: _{"}Airbus" mehrere Fußboden-Anschluß-Boxen aufweisen, die im Bodenbereich der Passagierkabinen des Flugzeuges installiert sind und unter der Bezeichnung: _{"}FDB" (Floor Disconnect Box) und _{"}PFDB" (Power Floor Disconnect Box) geläufig sind, um ein mit _{"}IFE" (In Flight Entertainment) bezeichnetes kanalverlegtes Unterhaltungssystem zu realisieren. Diese Boxen sind im Kabinenbereich über den gesamten Fußbodenbereich in Flugzeug-Längsachsenrichtung verteilt angeordnet, denen Daten- und Versorgungsleitungen angeschlossen sind, welche die Endgeräte und / oder sonstigen elektrischen Anschlüsse der Sitzausstattung über deren Sitzverkabelung mit Informationen und sonstiger Energiezufuhr versorgt. Die Sitzverkabelung wird gegenwärtig mittels sichtbarer Kabelkanäle realisiert, welche oberhalb des Fußbodens neben den Sitzschienen auf dem Fußbodenteppich angebracht sind. Dabei sind diese Kabelkanäle unter einer Kunststoffabdeckung fußbodenabstehend unterhalb der Sitzkonfiguration positioniert. Auch sind im Fußboden fest vorgegebene Aussparungen definiert, welche die erwähnten Fußboden-Anschluß-Boxen aufnehmen, von denen die abgehenden Kabel zu den Sitzen geführt werden. Diese Boxen werden in eine vorbereitete Fußbodenplatte größeren Ausmaßes mit einem tragenden Rahmen und einem Deckel installiert, wobei die abgehenden Kabel(bündel) im Bereich des verschraubbaren Deckels die Box verlassen. Eine sehr aufwendige Installation, die kompliziert und unflexibel ausgeführt wird. Ungeachtet des Vorteils, dass eine gute Zugänglichkeit der Kabelinstallation gewährleistet wird, haften der bekannten Kanal- und Kabelinstallation erhebliche Nachteile an. Danach liegen die Kabel relativ ungeschützt in der Kabine. Trennwände, welche den Kabinenbereich in mehrere Zonen unterteilen, können durch die fußbodenabstehende Kanalinstallation nicht umgangen werden. Der feste Einbauort der Fußboden-Anschluß-Boxen gestattet nur eine Realisierung der Sitzverkabelung mit geringer Flexibilität, die durch den Standort und die Sitzgestaltung beeinflusst wird. Ungeachtet der vorhandenen optischen Nachteile der vorgestellten Installation für ein Unterhaltungssystem, welche in der Hauptsache auf den fußbodenabstehenden Kanal, aber auch auf den Einbauort der Fußboden-Anschluß-Boxen samt der sichtbaren Anschlussverkabelung der Sitze respektive Sitzreihen (von Sitz zu Sitz), zurückgehen, lassen sich kaum oder nur eingeschränkt Vorstellungen der späteren Betreiber eines (bspw.) Passagierflugzeuges verwirklichen. Dabei werden Wünsche deutlich, die auf ein Abstellen der bestehenden Stolpergefahr (für Passagiere und Flugbegleitpersonal) sowie der drohenden Beschädigung der Geräte und der Anschlußverkabelung abzielt.

Demzufolge liegt der Erfindung die Aufgabe zugrunde, eine gattungsgemäße Kanal-Anordnung für ein flugzeuginternes Unterhaltungssystem derart zu verbessern, dass mit einem fußbodenintegrierten Leitungs- und Gerätekanal eine unkomplizierte und flexible Verkabelung der Sitze realisiert wird. Der fertigen Kanal-Anordnung sollen keine Restgefährdungen verbleiben, die eine drohende Stolpergefahr für Passagiere und Flugbegleitpersonal sowie eine mögliche Beschädigung der Geräte und Anschlussverkabelung provozieren. Neben einer kombinierten Aufnahme von Geräten und Leitungen innerhalb des Kanals wird eine kanalinterne Variation des Einbauorts der Geräte und der Anschlussverkabelung der Sitze angestrebt.

Diese Aufgabe wird durch die im Anspruch 1 angegebenen Maßnahmen gelöst. In den weiteren Ansprüchen sind zweckmäßige Ausgestaltungen dieser Maßnahmen angegeben.

Die Erfindung ist in einem Ausführungsbeispiel anhand der beigefügten Zeichnungen näher erläutert. Es zeigen
- Fig. 1: eine bekannte Kanal-Anordnung für flugzeuginterne Unterhaltungssysteme;
- Fig. 2: eine verbesserte Kanal-Anordnung für flugzeuginterne Unterhaltungssysteme;
- Fig. 3: eine vereinfachte Darstellung der Kanal-Anordnung nach Fig. 2 (ohne Darstellung der Leitungen und Geräte);
- Fig. 4: den Kanal;
- Fig. 5: die Kanalabdeckung;
- Fig. 6: eine erste Ausführung des Kabelführungselements;
- Fig. 7: die Seitenansicht des Kabelführungselements nach Fig. 6;
- Fig. 8: die Draufsicht des Kabelführungselements nach Fig. 6;
- Fig. 9: die Vorderansicht des Kabelführungselements nach Fig. 6;
- Fig. 10: eine zweite Ausführung des Kabelführungselements;
- Fig. 11: die Seitenansicht des Kabelführungselements nach Fig. 10;
- Fig. 12: die Draufsicht des Kabelführungselements nach Fig. 10;
- Fig. 13: die Vorderansicht des Kabelführungselements nach Fig. 10;
- Fig. 14: den Langlochbereich der Kanalabdeckung (ohne Führungsloch);
- Fig. 15: die langlochverschließende Blindeinlage;
- Fig. 16: die Blindeinlage nach Fig. 16 mit einer halblochartigen Aussparung.

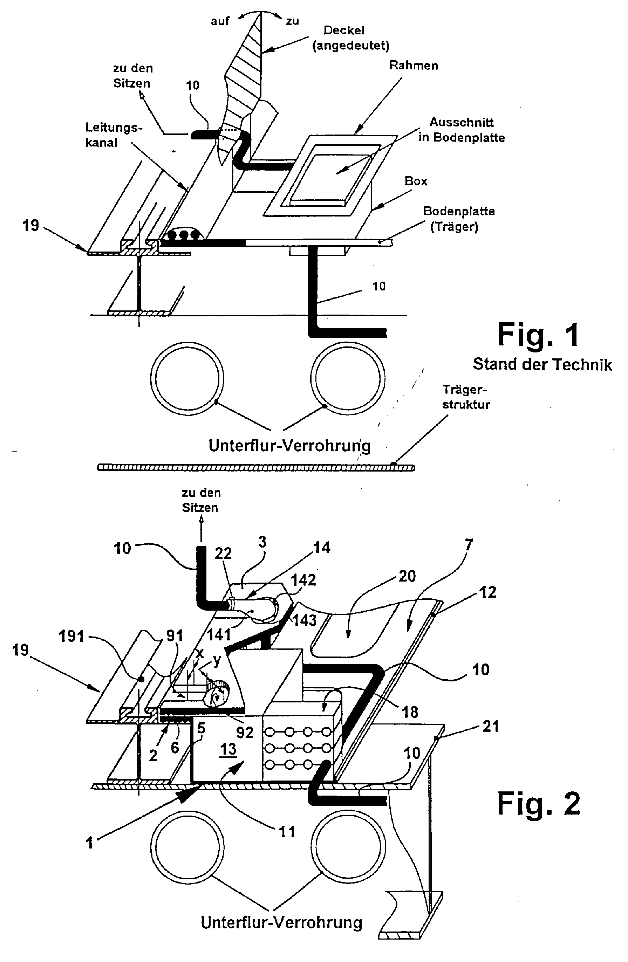

In der Fig. 1 wird eine bekannte Kanal-Anordnung für flugzeuginterne Unterhaltungssysteme dargestellt, die beispielsweise im Flugzeug vom Typ: _{"}Airbus A 340-600" installiert ist, welche einleitend gewürdigt wird. Aus dieser Darstellung wird man unschwer erkennen, dass die Verlegung der Leitungen in einem Kanal erfolgt, der sichtlich oberhalb des Flugzeug-Fußbodens bekannter Airbus-Typen neben einer Passagiersitz-Schiene auf dem Fußbodenteppich befestigt ist. Der Kanal, der in Richtung der Flugzeug-Längsachse verläuft, wird unterhalb der Passagiersitze von Sitzreihe zu Sitzreihe geführt. Die kanalverlegten Leitungen werden durch eine (simple erscheinende) Kunststoffabdeckung, die am Fußboden befestigt wird, abgedeckt. Die Verkabelung zwischen den Sitzen, die allgemein oft als: _{"}Sitz-zu-Sitz-Verkabelung" bezeichnet wird, umfasst Datenleitungen, die mit einer sogenannten _{"}Seat Electronic-Box" verbunden sind, und Stromversorgungsleitungen, sogenannte: _{"}Power Cable", die über die erwähnte PFDB (Power Floor Disconnect Box) für die gesamte Energieversorgung und -verteilung auf die Sitze zuständig sind. Diese Boxen werden beabstandet dem Kanal positioniert. Sie sind aus zwingenden Gründen (wegen einzuhaltener Vorschriften für die Zulassung eines Flugzeuges) an fest vorgeschriebenen Positionen innerhalb von fußbodenversenkten Aussparungen platziert. Die Boxen werden auf einer fußbodenversenkten Fußbodenplatte abgesetzt, die an einem teppichaufliegenden tragenden Rahmen, auf dem ein klappbarer Deckel fest angebracht ist, befestigt ist. Der klappbare Deckel erleichtert das Anschließen und der Zugänglichkeit aller Leitungen, die mit der Box verbunden sind. Die boxenabgehenden Leitungen verlassen diesen Installationsbereich durch den verschraubbaren Deckel und werden dann zu den Sitzen(reihen) geführt.

Ohne auf die eingangs genannten Nachteile dieser Installation, die sich keinesfalls durch eine aufwandsniedrige Montage- und durch eine befriedigende Passagierfreundlichkeit (wegen der erwähnten Restgefährdungen) auszeichnet, noch einzugehen, wird dem noch hinzu gefügt, dass die Installation der Boxen sich sehr an den Wünschen der späteren Betreiber orientiert, die aus Komfort-Gründen kundenabhängig eingerichtet wird. Da diese Kundenentscheidung(en) einen maßgeblichen Einfluß auf die Einrichtungs- oder Realisierungsphasen anderer Flugzeug-Montage-Abschnitte während der Flugzeugfertigung ausüben werden, lassen sich Kundenwünsche häufig nur mit hohem (unwirtschaftlichen) Aufwand erledigen. So wäre beispielsweise denkbar, dass die bekannten Kanal-Anordnung(en) und insbesondere die Anordnung der kanalintergrierten Boxen durch den Toilettenoder Galleyeinbau in einer Realisierungsphase beeinflusst wird, in der einen Kundenwunschänderung kaum, und dann nur mit hohem Aufwand, vollzogen werden kann. Außerdem würde ein hoher Bauunterlagen-Änderungsaufwand hinsichtlich der veränderten Position der erwähnten Fußbodenplatten inclusive der möglicherweise veränderten Kanalposition und der (erweiterten Leitungswege der) Verkabelung, die eine unpopuläre Gewichtszunahme des Flugzeuges tangieren - unausbleiblich sein.

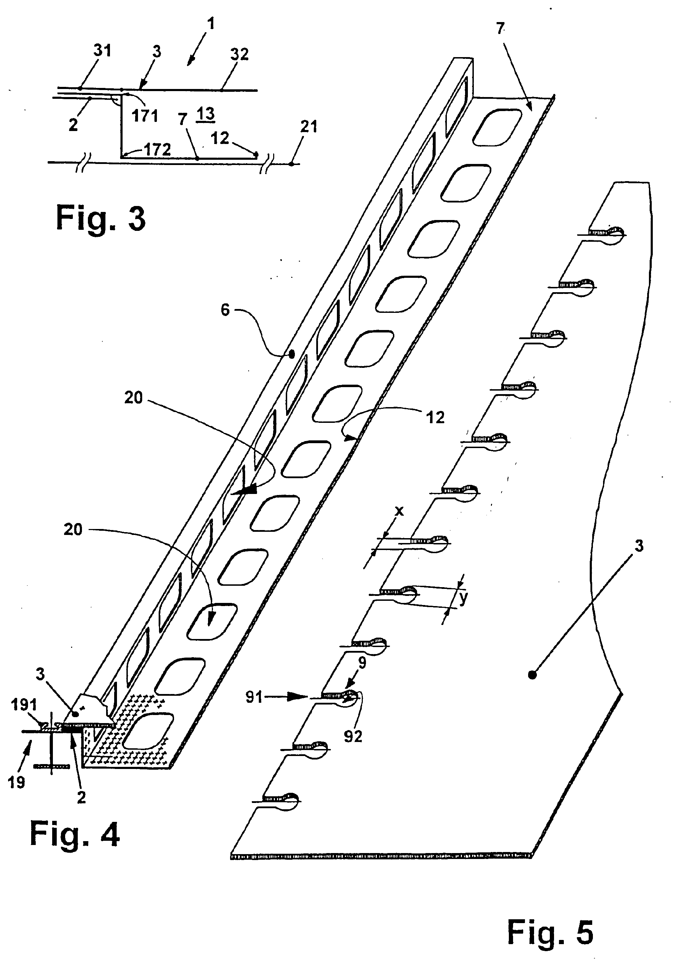

Die Lösung nach der Fig. 2 offenbart eine verbesserte Kanal-Anordnung für flugzeuginterne Unterhaltungssysteme, welche den geschilderten Kundenwünschen und der Vermeidung der vorgenannten Restgefährdungen gerecht wird. Die Kanal-Anordnung umfasst einen Kanal 1, dessen unterer Kanalgurtbereich 7, der funktionell einen Kanalboden verkörpert, einer fußbodenintegrierten Querträgerauflage 21 aufliegt, die den Kanal 1 in Hochachsenrichtung des Flugzeuges abstützt. Der Kanalquerschnitt des Kanal 1 ist mit einem doppel-L-artig gebogenen Leichtmetallprofil realisiert. Diese Doppel-L-Profilform wird als Sonderform einer Z-Form des Kanalquerschnitts angesehen, weil der untere und ein oberer Kanalgurtbereich 6, 7 mit dem Kanalmittelbereich 5 jeweils L-förmig verbunden sind. Diese Kanalgurtbereiche 6, 7 sind gegenüber dem Kanalmittelbereich 5 im rechten Winkel - aber jeweils in entgegengesetzter Richtung abgewinkelt. Dabei ist der querliegende obere Kanalgurtbereich 6 gegenüber dem Kanalmittelbereich 5 nach links weisend und der querliegende untere Kanalgurtbereich 7 dem Kanalmittelbereich 5 nach rechts weisend abgewinkelt, woraus sich die angegebene Doppel-L-Form ergibt. Der Kanal 1 ist (nach der Fig. 2) neben einer fußbodenintegrierten Profilauflage 2 angeordnet, die mit horizontaler Lage in Flugzeug-Längsachsenrichtung 4 verläuft. Letztere ist Bestandteil einer Sitzschienenführung 19 für Flugzeug-Sitze. Ein vorgreifenden Blick auf die Fig. 3, aus der man eine vereinfachte Darstellung der Kanal-Anordnung nach Fig. 2 erkennen wird, vermittelt dem Betrachter die Lage des Kanals 1 etwas anschaulicher, die sich auf die Darstellung nach der Fig. 2 unschwer übertragen lassen wird. Die Fig. 3 zeigt neben der doppel-L-fömigen Gestalt des Kanalprofils, dass der linksseitig dem senkrechtstehenden Kanalmittelbereich 5 (Stegblech) rechtwinklig abgewinkelte obere Kanalgurtbereich 6 (als oberer Blechteil des Blechträgers) ebenflächig auf der Profilauflage 2 positioniert ist. Auch erkennt man, dass der untere Kanalgurtbereich 7 ebenflächig auf der horizontal gelegenen Auflagefläche der Querträgerauflage 21 angeordnet ist, die den Kanal 1 abstützt. Außerdem ist an den unteren Kanalgurtbereich ein lotrecht stehender Flanschbereich 12 kantenrandseitlich angesetzt, auf dessen Funktion später eingegangen wird.

Dieser sogenannte schmale Flanschbereich 12, der in Flugzeug-Längsachsenrichtung 4 verläuft und sich von der Querträgerauflage 21 senkrechtstehend abwendet, besitzt - über die gestreckte Länge des Kanalprofils (die Profiltiefe des Kanals 1) betrachtet - ein streifenartiges Aussehen.
Der offene Kanalquerschnitt wird mit einer Kanalabdeckung 3 abgedeckt, die über die gestreckte Länge des Kanalprofils dem Kanal 1 obenauf liegt. Die Kanalabdeckung 3 wird als Fußbodenplatte eingesetzt, der querseitig mehrere Kabeldurchführungen 9 ausgespart sind. Diese Kabeldurchführungen 9 sind längsseitig der Kanalabdeckung 3 im Abstand zueinander angeordnet, die als ein randseitlich geöffnetes Langloch 91, das mit oder ohne einem Führungsloch 92 abschließt, ausgeführt ist. Das Langloch 91 ist einem Randbereich 31 und einem an letzteren angrenzenden Abdeckungsbereich 32, deren Flächenbereich sich querseitig der Kanalabdeckung 3 aufspannt, ausgespart. Zurückkommend auf die Anordnung der Kanalabdeckung 3 oberhalb des Kanals 1 wird man aus den Figuren 2 und 3 entnehmen, dass der längsseitig der Abdeckung mit Langlöchern 91 ausgesparte Randbereich 31 auf dem oberen Kanalgurtbereich 6 abgelegt ist, wobei die bis in den angrenzenden Abdeckungsbereich 32 geführten Langlöcher 91 mit dem (nach der Fig. 2) endseitig positionierten Führungsloch 92 oberhalb dem offenen Profilbereich 13 des Kanals 1 angeordnet sind. Damit sind randseitlich aufliegend der fußbodenintegrierten Profilablage 2 zunächst der obere Kanalgurtbereich 6 und auf diesem der Randbereich 31 der Abdeckplatte 2 aufeinander liegend abgelegt. Auch erkennt man aus der Fig. 2, dass auf der Kanalabdeckung 3 oberhalb der Kanaldurchführung 9 jeweils ein Kabelführungselement 14 angeordnet ist. Letzteres ist mit einem Halbrohr 141, dem halbrohrendseitig ein Flansch 142 angesetzt ist, realisiert. Der (nicht sichtbaren) Flanschfläche ist stirnseitig eine Flanschöffnung ausgenommen, die in Verlängerung der Halbrohrachse mit dem Durchmesser des Halbrohres realisiert ist. Dem Rohrflansch sind randseitlich verteilt mehrere Flanschlöcher 143 ausgenommen, um das Kabelführungselement 14 mit diesem Flansch 142, welcher deckungsgleich dem Führungsloch 92 der Kabeldurchführung 14 angeordnet ist, (beispielsweise) in (nicht gezeigten) Gewindelöchern mittels geeigneter Befestigungselemente, die sich (beispielsweise) den beispielhaften Gewindelöchern schrauben lassen, an der Kanalabdeckung 3 zu befestigen. Nach der Fig. 2 ist das gezeigte Kabelführungselement 14 zur Kanalabdeckung 3 geneigt abgewinkelt.

Auf dem als Kanalboden dienenden unteren Kanalgurtbereich 7 sind nebeneinander liegend ein Gerät 11 und ein klotzartiger Kabelhalter 18 angeordnet. Anstelle dem (allgemein bezeichneten) Gerät 18 wird beispielsweise eine Fußboden-Anschluß-Box vom sogenannten Typ: _{"}FDB" oder _{"}PFDB" und eine ergänzende Sitz-Elektronik-Box _{"}SEB" (Seat Electronic Box) verwendet, deren Zweck zur Umsetzung des flugzeuginternen Unterhaltungssystems vorher erläutert wurde. Der in Flugzeug-Querachsenrichtung geteilte Kabelhalter 18, der gewissermaßen aus mehreren übereinander positionierten Kabelhalterteilen besteht, besitzt in seiner Endposition auf dem unteren Kanalgurtbereich 7 mehrere in Flugzeug-Längsachsenrichtung 4 ausgenommene Durchgangslöcher. Sofern man durch diese Durchgangslöcher eine einzelne Leitung 10 führt, wird letztere in dem betreffenden Durchgangsloch durch die (in Flugzeug-Hochachsenrichtung) ausgeübte Druckkraft, die auf den einzelnen Kabelhalterteilen (beispielsweise von einer fußbodenbefestigten Kanalabdeckung 3 ausgehend) lastet, fixiert.

Diese kanalverlegten Leitungen, wozu auch die dargestellte Leitung 10 und auch die Leitungen, die dem Gerät 11, beispielsweise der Fußboden-Anschluß-Box, angeschlossen sind, werden durch die randseitlich der Kanalabdeckung 3 installierten Kabelführungselemente 14, von denen nur ein einziges dargestellt ist, den Kanal 1 verlassen und den Flugzeugsitzen (als Bestandteil der Sitz-Sitz-Verkabelung) zugeführt.

In den Figuren 4 und 5 werden nun der Kanal 1, der wegen seines Verwendungszweckes ein _{"}Leitungs- und Gerätekanal" ist, und die Kanalabdeckung 3 in einer Einzeldarstellung gezeigt. Dabei fällt nach der Fig. 4 auf, dass der Kanal 1 mit Perforationen versehen ist. Deutlich erkennbar wird, dass dem Kanalmittelbereich 5 und dem unteren Kanalgurtbereich 7 mehrere Öffnungen 20 ausgespart sind, die über die gestreckte Profillänge des Kanals 1 zueinander beabstandet sind. Diese Öffnungen 20 dienen der Kanalbelüftung, um die installierten Geräte 11 und die kanalaufgenommenen Leitungen 10 beispielsweise vor entstehendem Wärmestau während des Betriebes zu schützen und für eine kühle Luftumspülung und Ableitung der kanalerwärmten Luft zu sorgen. In der Fig. 5 wird nochmals die Anordnung der Langlöcher 91 einschließlich der Führungslöcher 92 zu dem beabsichtigten Zweck gezeigt. Deutlich erkennt man, dass die einzelne Kabeldurchführung 9 kantenrandseitlich dem Randbereich 31 geöffnet und endseitig dem angrenzenden Abdeckungsbereich 32 mit dem Führungsloch 91, dessen Lochdurchmesser größer dem Langlochdurchmesser ist, ausgeführt ist.

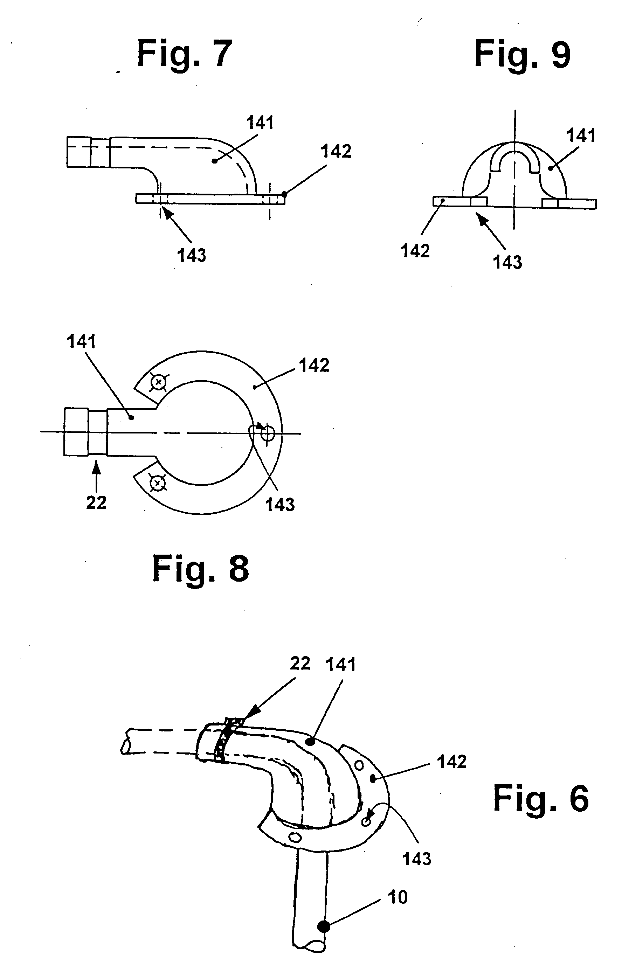

In den Figuren 6 bis 9 und den Figuren 10 bis 13 werden diverse Ausführungen der Kabelführungselemente 14 vorgestellt. Eine erste Ausführungsform dieses Kabelführungselementes 14 kann man bereits in der Fig. 2 betrachten, das in der Fig. 6 einzeln dargestellt wird. In der Fig. 7 wird eine Seitenansicht, in der Fig. 8 eine Draufsicht und in der Fig. 9 eine Vorderansicht dieses Kabelführungselementes 14 ergänzend dargestellt. Aufgrund der voran gestellten Ausführlichkeit erübrigen sich weitere Ausführungen hinsichtlich dieser Ausführungsform.

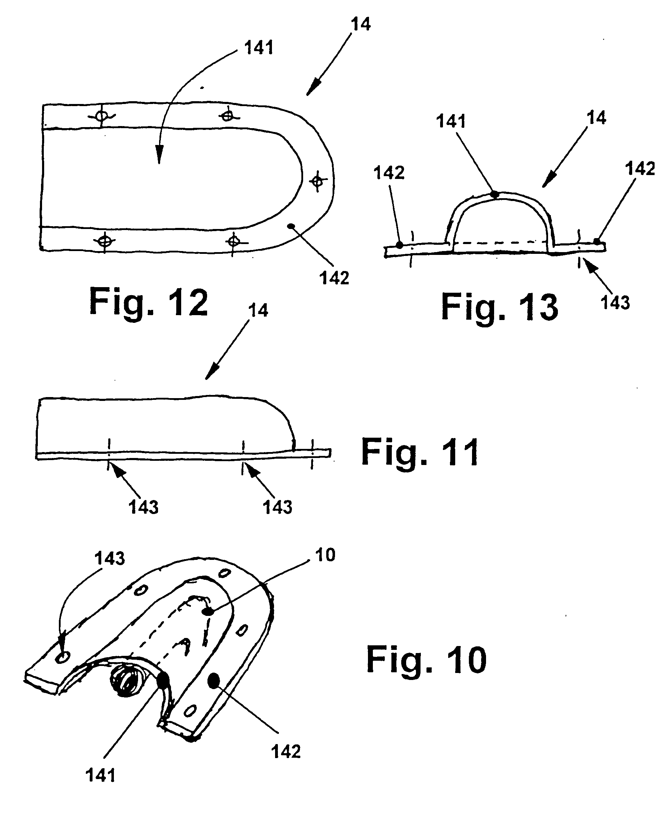

Anders bei einer zweiten Ausführungsform des Kabelführungselementes 14, das in der Fig. 10 einzeln dargestellt wird. Diese Ausführung bezieht sich auf eine Kabeldurchführung 9, die ohne Führungsloch 92 - also nur mit einem Langloch 91 ausgeführt wird. Der Flansch 142 dieses Kabelführungselementes 14 besitzt eine hufeisenförmige Gestalt. Die Innenseiten dieses Flansches 142, die einen (für den Durchtritt einer einzelnen Leitung 10 oder eines Leitungsbundes vorgesehenen) offenen Eintrittsbereiches einschließen, und die freien Enden der Rohrwandung des Halbrohres 141 sind, beispielsweise durch eine Schweißnaht an der Fügestelle, mechanisch verbunden. Dabei ist vorgesehen, dass dieser eingeschlossene offene Eintrittsbereich (bei geschehener Auflage des Flansches 142 auf der Kanalabdeckung 3) deckungsgleich den Langlochbereich der Kabeldurchführung 3 umklammert, sofern die Leitungsabführung von einer Leitung 10 aus dem Kanal 1 beabsichtigt wird. In der Fig. 11 wird eine Seitenansicht, in der Fig. 12 eine Draufsicht und in der Fig. 13 eine Vorderansicht dieses Kabelführungselementes 14 nach der Ausführung gemäß der Fig. 10 ergänzend dargestellt.

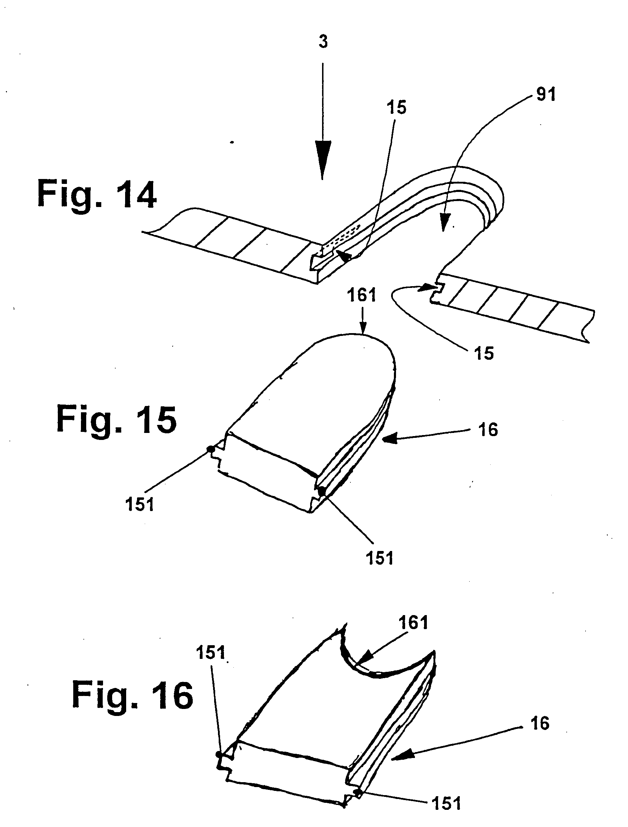

Um eine kanalaustretende Leitung 10, wie beispielsweise in der Fig. 2 dargestellt, im Langloch 91 der Kanalabdeckung 3 ausreichend, beispielsweise rüttelfest gegen flugzeugintern auftretende Vibrationen, zu fixieren, die nach dem Vorbild der Figuren 6 oder 10 ein auf der Kanalabdeckung 3 flanschbefestigtes Kabelführungselement 14 verlassen, wird eine plattenförmige Blindeinlage 16, welche die Materialstärke der Kanalabdeckung 3 aufweist, nach dem Vorbild der Fig. 16 zum Einsatz vorgesehen, die sich dem Langloch 91 nutengeführt einschieben lässt. Deshalb ist dem Langloch 91 nach der Fig. 14 mittig des Querschnitts (der Materialstärke) der Kanalabdeckung 3 eine nutenartige Vertiefung 15 ausgenommen, die als sogenannte Führungsnut für einen der Blindeinlage 16 nach den Figuren 15 und 16 angeformten trapezförmigen Ansatz 151, dessen Querschnitt (Materialstärke) dem(der)jenigen der Führungsnut angepasst ist, ausgebildet ist. Aus den Figuren 15 und 16 kann man den angeformten Ansatz 151, welcher umfänglich der Blindeinlage 16 und mittig dem Querschnitt der Blindeinlage 16 angeformt ist, welcher der Nutenführung des Langloches 91 angepasst ist, deutlich erkennen. Damit eine kanalverlassende Leitung 10 sich ausreichend genug fixieren lässt, ist nach der Fig. 16 dem der Rundung des Langlochs 91 oder des Führungslochs 92 angepassten Endbereich 161 der Blindeinlage 16 eine (der Leitungsumhüllung angepasste) halblochförmige Aussparung eingefasst, die- wie angedeutet - durchaus dem halben Lochdurchmesser des Führungsloches 92 entsprechen wird. Anderenfalls, sofern die Blindeinlage 16 wirklich nur als das Langloch 91 vollständig verschließendes Element vorgesehen wird, entfällt nach der Fig. 15 die halblochförmige Aussparung des Endbereiches 161 der Blindeinlage 16.

Zusammenfassend wird eine Kanal-Anordnung mit einem Kanal 1 (Leitungs- und Gerätekanal) vorgestellt, der für den kombinierten Einbau von Geräten 11 sowie der Sitz-zu-Sitz-Verkabelung mit Leitungen 10 geeignet ist. Für den Kanal 1 werden verschiedene Mittel zur Fixierung und Befestigung des Kanals 1 vorgesehen. Der Kanal 1 wird aus einem leitfähigen perforierten Leichtmetallprofil, das durchaus ein dünnwandiges Metallprofil (Metallblech) ist, bestehen, welcher mit Elementen zur Masseverbindung mit der Metallstruktur des Flugzeuges (wegen Umsetzung der Blitzschutz-Maßnahmen oder sonstigen Maßnahmen der elektromagnetischen Verträglichkeit _{"}EMV") ausgestattet sein wird. Die Form des Kanals 1 ist mit einem zur rechten Seite offenen U-Profil vergleichbar, wenngleich auch die Bezeichnung:"Doppel-L-Profil" verwendet wird. Es ist beabsichtigt, dass der obere Kanalgurtbereich 6 nach Laschenart auf der Profilauflage 2 der Sitzschienenkante einer Sitzschienenführung 19 und mit dem unteren Kanalgurtbereich 7 (Boden) auf der Querträgeroberkante einer Querträgerauflage 21 fixiert wird. Danach liegt die mit Kabeldurchführungen 9 versehene perforierte Kabelabdeckung 3 (Fußbodenplatte) der Sitzschienenführung 19 auf, die horizontal gegen ein Sitzschienen-Führungsprofil 191 (an)stoßen wird. Eine Isolierung der übereinander angeordneten Auflageflächen genannter Mittel (Profilauflage 2, oberer Kanalgurtbereich 6, Kanalabdeckung 3) mit einem Dichtungsband oder einem sonstigen Isoliermittel wird wegen des Eindringens an Feuchtigkeit oder sonstigen Umweltbelastungen nicht extra hervorgehoben.

Der Kanal 1 ist mit Öffnungen versehen, um die Verkabelung von unten oder von der Seite an die Geräte 11, die im Kanal 1 fixiert sind, zu führen. Die Längsverkabelung wird in klotzartigen Kabelhaltern (Kabelhalterböcken) geführt, um eine eventuelle Segregation zu erfüllen und eine Beschädigung der Leitungen 10 zu verhindern. Um in dem Bereich, in dem das Kabel 1 aus dem Kanalabdeckung 3 heraus geführt wird, wird ein Kabelführungselement 14 angebracht werden, welches einerseits die kanalverlegte Leitung 10 in eine etwa 90°-Führung bringen kann und andererseits den Bereich der Langlochöffnung insbesondere vor Tropfflüssigkeiten und die Leitung 10 vor mechanischen Einwirkungen schützen wird. Die Leitungsführung mittels dem Kabelführungselement 14 soll kuppelförmig ausgelegt sein und zum Leitungs-Austrittsende mit einem Kabelbinder 22 am Halbrohr 141 befestigt werden. Das kuppelförmige Kabelführungselement 14 wird auf der Kanalabdeckung 3 fixiert. Nach der Installation aller Geräte 11 sowie deren Verkabelung wird die mit den Kabelführungselementen 14 (Kabeldurchführungen) perforierte Kanalabdeckung 3 (Fußbodenplatte) herkömmlich befestigt. Der offene Bereich der Kabeldurchführungen 9 wird ggf. mit Blindeinlagen 16 (Gummi-Inserts) abgedichtet. Erwähnt wird auch, dass im Kanal 1 einerseits Geräte 11 sowie die jeweiligen Versorgungsleitungen, Datenleitungen und Netzwerkverbindungen kanalintern integriert sind. Die Geräte 11 werden mit den verschiedenen Mitteln zur Fixierung im Kanal 1 befestigt. Die Bauform einer integrierten Box wird nach der vorgestellten Lösung vor vielen einzelnen Boxen bevorzugt werden, um eine nicht so hohe Anzahl an Befestigungsvariationen und Leitungsvarianten zu erzeugen.

Die vorgestellte Kanal-Anordnung eröffnet eine sehr flexible Möglichkeit, Geräte 11 und deren Verkabelung hinsichtlich der Bauausführung frühzeitig zu erwägen. Man wird somit eine kundenunabhängige Standardinstallation und eine Fertigungsvereinfachung umsetzen können. Ein hoher Aufwand an Bauunterlagen-Änderungen wird hinsichtlich der Verkabelung der Unterhaltungssysteme während der Fertigung eines (Passagier-)Flugzeuges der Vergangenheit angehören. Da im Flugzeug Geräteeinbauplätze (aus verschiedenen Gründen) sehr schwierig festlegbar sind, wird diese Kanal-Anordnung auch anderen Geräteinstallationen sowie deren Leitungsverbindung mit anderen Systemen (außerhalb der Unterhaltung) optional zugänglicher, womit den Vorstellungen eines späteren Flugzeugbetreiber bei der Realisierung eines Passagierflugzeuges kundenfreundlich entsprochen wird.

## Patentansprüche

1. Kanal-Anordnung zur Aufnahme von isolierten Leitungen (10) und Geräten (11) in einem Verkehrsflugzeug, mit einem Kanal (1) für flugzeuginterne Unterhaltungssysteme, der einer strukturintegrierten Querträgerauflage (21) aufliegt und durch letztere abgestützt ist, welcher nahe oder neben einer fußbodenintegrierten und horizontal angeordneten Profilauflage (2) gelegen ist, wobei die fußbodenintegrierte Profilauflage (2) und eine plattenartige Kanalabdeckung (3) in Flugzeug-Längsachsenrichtung (4) geführt sind, wobei
der Kanalquerschnitt mit einem doppel-L-förmig gebogenen Leichtmetallprofil realisiert ist, dessen stegartiger Kanalmittelbereich (5) lotrecht stehend auf der Querträgerauflage (21) positioniert ist, dessen oberer Kanalgurtbereich (6), der seitwärts an einer oberen Biegekante (171) des Kanalmittelbereiches (5) über die gestreckte Profillänge rechtwinklig abgewinkelt ist, auf der fußbodenintegrierten Profilauflage (2) aufliegt und dessen als Kanalboden dienender unterer Kanalgurtbereich (7), der seitwärts an einer unteren Biegekante (172) des Kanalmittelbereiches (5) und in entgegen gesetzter Richtung zum oberen Kanalgurtbereich (6) rechtwinklig abgewinkelt ist, auf der horizontal gelegenen Querträgerauflagefläche angeordnet ist, wobei weiterhin in einem Randbereich (31) der Kanalabdeckung (3), der sich in Flugzeug-Längsachsenrichtung (4) erstreckt, querseitig der Kanaiabdeckung (3) mehrere Kabeldurchführungen (9) ausgespart sind, die längsseitig der Kanalabdeckung (3) im Abstand zueinander angeordnet sind, und durch die eine kanalverlegte Leitung (10) oder ein Leitungsbündel durchführbar sind, wobei der Randbereich (31) randseitlich auf dem oberen Kanalgurtbereich (6) aufliegend angeordnet ist.

2. Kanal-Anordnung nach Anspruch 1, **dadurch gekennzeichnet, dass** rand- und längskantenseitlich dem unteren Kanalgurtbereich (7) ein lotrecht stehender und zum Fußboden gerichteter schmaler Flanschbereich (12) angesetzt ist, der in Flugzeug-Längsachsenrichtung (4) streifenartig angeordnet ist.

3. Kanal-Anordnung nach Anspruch 1, **dadurch gekennzeichnet, dass** die einzelne Kabeldurchführung (9) als randseitlich geöffnetes Langloch (91), das oberhalb des offenen Profilbereichs (13) des Kanals (1) mit einem Führungsloch (92) abschließt, ausgeführt ist, wobei das Langloch (91) in dem Randbereich (31) und einem letzteren angrenzenden Abdeckungsbereich (32) der Kanalabdeckung (3) ausgespart ist.

4. Kanal-Anordnung nach Anspruch 3, **dadurch gekennzeichnet, dass** der Lochdurchmesser des Führungsloches (92) größer als der Langlochdurchmesser ist.

5. Kanal-Anordnung nach den Ansprüchen 3 und 4, **dadurch gekennzeichnet, dass** auf der Kanalabdeckung (3) oberhalb der einzelnen Kanaldurchführung (9) jeweils ein Kabelführungselement (14) angeordnet ist, das mit einem Halbrohr (141), dem halbrohrendseitig ein Flansch (142) angesetzt ist, realisiert ist, wobei der Flanschfläche stirnseitig eine Flanschöffnung ausgenommen ist, die an der Halbrohrachse mit dem Durchmesser des Halbrohres (141) realisiert ist, und das Kabelführungselement (14) randseitlich dem Führungsloch (92) an der Kanalabdeckung (3) befestigt ist.

6. Kanal-Anordnung nach Anspruch 5, **dadurch gekennzeichnet, dass** das Kabelführungselement (14) zur Kanalabdeckung (3) abgewinkelt ist.

7. Kanal-Anordnung nach Anspruch 5, **dadurch gekennzeichnet, dass** die Rohröffnung des Halbrohres (142) auf die Kanalabdeckung (3) gerichtet ist.

8. Kanal-Anordnung nach Anspruch 1, **dadurch gekennzeichnet, dass** die einzelne Kabeldurchführung (9) ohne ein Führungsloch (92) hufeisenförmig ausgebildet ist, und oberhalb der einzelnen Kabeldurchführung (9) ein Kabelführungselement (14) angeordnet ist, das mit einem Halbrohr (141), dem halbrohrendseitig ein hufeisenförmiger Flansch (142) angesetzt ist, realisiert ist, wobei die freien Enden der Rohrwandung des Halbrohres (141) den Innenseiten des hufeisenförmigen Flansches (142), die bei geschehener Flanschauflage auf der Kanalabdeckung (3) den Langlochbereich der Kabeldurchführung (3) umklammern, angeformt sind.

9. Kanal-Anordnung nach Anspruch 3 oder 8, **dadurch gekennzeichnet, dass** dem Langloch (91) mittig des Querschnitts der Kanalabdeckung (3) eine nutenartige Vertiefung (15) ausgenommen ist, die als Führungsnut für einen trapezförmigen Ansatz (151) einer Blindeinlage (16), dessen Querschnitt der Führungsnut angepasst ist, ausgebildet ist.

10. Kanal-Anordnung nach Anspruch 9, **dadurch gekennzeichnet, dass** innerhalb dem Langloch (91) die plattenförmige Blindeinlage (16) angeordnet ist, die entweder das Langloch (91) vollständig verschließt oder bei vorhandenem Führungsloch (92) bis an dieses geführt ist, wobei dem eingeführte Endbereich (161) der Blindeinlage (16) eine halblochförmige Aussparung eingefasst ist.

11. Kanal-Anordnung nach den Ansprüchen 3 und 10, **dadurch gekennzeichnet, dass** die halblochartige Aussparung dem Durchmesser des Führungsloches (92) angepasst ist.

12. Kanal-Anordnung nach Anspruch 1, **dadurch gekennzeichnet, dass** der obere Kanalgurtbereich (6) flachaufliegend der fußbodenintegrierten Profilauflage (2) sowie der untere Kanalgurtbereich (7) flachaufliegend der Querträgerauflagefläche angeordnet ist.

13. Kanal-Anordnung nach Anspruch 1, **dadurch gekennzeichnet, dass** auf dem unteren Kanalgurtbereich (7) über die gestreckte Länge des Kanals (1) verteilte kastenartige Geräte (11) mit integrierter Elektronik und Kabelhalter (18) zur Fixierung der verlegten Leitungen (10) beabstandet angeordnet sind, die nahe oder unterhalb der Kabeldurchführung (9) und nebenoder übereinander gelegen sind.

14. Kanal-Anordnung nach Anspruch 1, **dadurch gekennzeichnet, dass** mittig der fußbodenintegrierten Profilauflage (2) eine in Flugzeug-Längsachsenrichtung (4) positionierte Sitzschienenführung (19) für Flugzeugsitze befestigt ist, an deren Sitzschienen-Führungsprofil (191) das freie Ende des oberen Kanalgurtbereichs (191) horizontal anstoßend angeordnet ist.

15. Kanal-Anordnung nach Anspruch 1, **dadurch gekennzeichnet, dass** in dem Kanalmittelbereich (5) und in dem unteren Kanalgurtbereich (7) mehrere Öffnungen (20) ausgespart sind, die über die gestreckte Profillänge des Kanals (1) zueinander beabstandet sind.

16. Kanal-Anordnung nach Anspruch 1, **dadurch gekennzeichnet, dass** zwischen der Profilauflage (2) und dem oberen Kanalgurtbereich (6) und zwischen letzterem und der Kanalabdeckung (3) ein Dichtmittel geschichtet ist.
